# FASCICULE DE BREVET EUROPEEN

(11) **EP 2 511 176 B1**
(45) Date de publication et mention de la délivrance du brevet: **17.09.2014**
(21) Numéro de dépôt: 12164012.2
(22) Date de dépôt: 13.04.2012
(51) Int. Cl.: B64C 27/72, B64C 27/473

(54) **Pale de voilure tournante, rotor comprenant au moins deux telles pales et procédé de mise en oeuvre d'un tel rotor**
Drehflügelblatt, Rotor, der mindestens zwei solcher Blätter umfasst, und Verfahren zum Einsatz eines solchen Rotors
Blade of a rotary wing, rotor comprising at least two such blades and method for implementing such a rotor

(30) Priorité: 13.04.2011 FR 1101126
(43) Date de publication de la demande: 17.10.2012
(73) Titulaire: ONERA (Office National d'Etudes et de Recherches Aérospatiales), 92322 Châtillon Cedex (FR)
(72) Inventeur: Mercier des Rochettes, Hugues, 59910 Bondues (FR); Buchaniek, Léon, 59890 Quesnoy-sur-Deule (FR); Joly, Didier, 59184 Sainghin en Weppes (FR); Dupas, Jacques, 59000 Lille (FR); Leconte, Philippe, 92320 Chatillon (FR)
(74) Mandataire: Gevers France

(56) Documents cités:
- CN-A- 101 870 359
- DE-C1- 19 859 041
- DE-U1- 8 611 677
- FR-A1- 2 924 681
- US-A- 6 076 776

## Description

La présente invention concerne les rotors de voilure tournante notamment pour hélicoptères, ainsi que les pales pour de tels rotors.

On sait que les pales d'un rotor de voilure tournante d'hélicoptère sont commandées en pas collectif et en pas cyclique.

Le pas collectif permet le vol stationnaire de l'hélicoptère par un positionnement identique en incidence de toutes les pales par rapport à l'axe de rotation dudit rotor, alors confondu avec l'axe d'entraînement du mât de celui-ci, ledit pas collectif engendrant une portance générale qui est alignée avec la verticale et qui équilibre la masse de l'hélicoptère.

Quant à lui, le pas cyclique permet, par un positionnement en incidence de chaque pale en fonction de l'azimut, d'incliner la portance générale par rapport à la verticale et donc de mouvoir ledit hélicoptère.

Pour la commande en pas collectif et en pas cyclique, les rotors comportent généralement un mécanisme, appelé plateau cyclique, monté sur le mât du rotor et comportant un plateau tournant lié à chaque pale par une biellette de pas et entraîné en rotation par un compas mobile, un plateau fixe coulissant le long du mât du rotor et inclinable par rapport à celui-ci et une liaison de roulement entre lesdits plateaux fixe et tournant.

Un tel plateau cyclique présente l'inconvénient de comporter un nombre important de pièces mécaniques nécessitant une maintenance et un contrôle réguliers.

On a donc déjà envisagé de supprimer ledit plateau cyclique en montant des volets mobiles sur lesdites pales, le pas cyclique de celles-ci étant commandé par le vrillage desdites pales engendré par le moment de torsion induit par le braquage desdits volets et le pas collectif des pales étant obtenu soit de manière semblable à celle des hélices, soit par un actionneur disposé en pied de pale.

Cependant, de tels volets mobiles nécessitent également l'utilisation d'ensembles mécaniques compliqués et sujets à frottement.

La présente invention comprend une pale de voilure tournante, un rotor, notamment pour hélicoptère, ne comportant pas de plateau cyclique et un procédé de mise en oeuvre remédiant aux inconvénients de la technique antérieure rappelée ci-dessus.

La Pale, selon l'invention, d'une voilure tournant autour du moyeu d'un rotor de fréquence de rotation, ladite pale, dont l'azimut de rotation est connu, d'envergure E, comportant une partie d'attache audit moyeu et une partie aérodynamique, et ayant différents modes de déformation notamment un mode de torsion autour de son envergure (E) de fréquence propre fonction de sa rigidité de torsion autour de ladite envergure (E), **caractérisée en ce** que :
- elle comporte des moyens de vrillage dynamique, approximativement autour de son envergure, pouvant être actionnés en temps réel, c'est-à-dire pendant sa rotation autour dudit moyeu, à au moins à la fréquence de rotation dudit rotor et en synchronisme avec l'azimut de rotation de ladite pale, de sorte à ce que ces moyens de vrillage dynamique puissent générer un pas cyclique même en absence de plateau cyclique ;
- sa rigidité, apparente sous force centrifuge, de torsion approximativement autour de son envergure, est suffisamment faible pour permettre, auxdits moyens de vrillage dynamique, d'obtenir, dans le plan de section droite de l'extrémité libre de ladite pale, un angle de vrillage dynamique élastique (v) de la corde d'au moins 14° piqueur ou cabreur, tout en restant suffisamment élevée pour que la fréquence propre de torsion de la pale autour de son envergure soit égale à la fréquence de rotation dudit rotor, de façon à permettre un vrillage dynamique de la pale par résonance de torsion et donc de minimiser l'énergie nécessaire à la génération du pas cyclique ;
- son facteur d'amortissement, sous force centrifuge, est strictement positif, afin d'éviter la divergence de résonance des différents modes.

Il est rappelé qu'il est bien connu de l'homme du métier que pour obtenir un angle de vrillage d'amplitude donnée d'une pièce mécanique, il dispose d'une méthode qui est d'ajuster la puissance des actionneurs de torsion et d'une seconde méthode qui est d'ajuster la rigidité de ladite pièce mécanique. La solution retenue dans l'invention est de combiner ces deux méthodes en utilisant une pale moins rigide en torsion que dans l'état de l'art afin de limiter le poids des actionneurs tout en disposant d'une amplitude de vrillage d'au moins 14° cabreur ou piqueur pour réaliser un pas cyclique. II est connu de l'état de l'art différents moyens de diminuer la rigidité de torsion d'une pièce mécanique comme une pale : il est possible de fendre longitudinalement la coque de la pale (comme dans la demande de brevet du même auteur, publiée sous le n° FR 2924681) ou d'utiliser des matériaux structuraux, de remplissage ou de revêtement de moindre rigidité en torsion.

II est rappelé également que l'homme du métier connaît, comme tout mécanicien, différents moyens d'obtenir un facteur d'amortissement de pale strictement positif. II connaît par exemple la méthode passive consistant à ajouter à la structure de la pale un matériau de facteur d'amortissement supérieur à 10%, comme par exemple des butées en caoutchouc en pied de pale ; ou encore la méthode active de contrôle actif de vibrations.

II est précisé par ailleurs que les matériaux et la structure de la pale sont choisis pour pouvoir supporter des vrillage d'amplitude d'au moins 14° piqueur ou cabreur et répétés à des fréquences pouvant aller jusqu'à plusieurs fois la fréquence de rotation maximale du rotor (cas de la commande multi-cyclique du vrillage pour réaliser du contrôle actif des vibrations) tout en restant dans son domaine de déformation élastique.

Ainsi, grâce à la présente invention, on obtient un rotor de voilure tournante, notamment d'hélicoptère, aisé à commander en pas cyclique et avec une faible énergie, permettant la suppression du plateau cyclique, tout en évitant tout couplage entre les modes de battement et de torsion.

II est à noter que la souplesse de la pale peut provenir soit de celle de l'attache, soit de celle de la partie aérodynamique, soit des deux. Par exemple, lorsque, de façon connue, chacune desdites pales est constituée en majeure partie par une partie aérodynamique (celle dont la variation de pas est aérodynamiquement active) reliée au moyeu du rotor par une plus courte partie d'attache, la fréquence propre de torsion de la pale (dans son ensemble) peut être obtenue par la combinaison des coefficients de rigidité de ladite partie aérodynamique et de ladite partie d'attache. Une telle combinaison permet avantageusement à l'actionneur correspondant de disposer d'une plage angulaire de torsion suffisante pour être utilisé en mode multicyclique.

Avantageusement, selon un deuxième mode de réalisation, l'invention est une pale selon le mode de réalisation précédent, **caractérisée en ce que** ladite partie d'attache présente une rigidité apparente de torsion de 10 à 100 fois inférieure à celle de la partie aérodynamique.

Avantageusement, selon un troisième mode de réalisation, l'invention est une pale selon l'un des deux modes de réalisation précédents, caractérisée en ce que :
- sa structure est en matériau composite ;
- son revêtement est unidirectionnel et la direction de ce revêtement forme un angle sensiblement égal à 0° avec l'envergure de ladite pale, de sorte à obtenir une rigidité de torsion minimale de la pale autour de l'envergure.

Avantageusement, selon un quatrième mode de réalisation, l'invention est une pale selon l'un des trois modes de réalisation précédents, **caractérisée en ce que** la partie aérodynamique est pourvue d'une fente longitudinale dans l'une de ses surfaces d'intrados ou d'extrados et comporte :
- un premier longeron qui forme le bord d'attaque et les parties d'intrados et d'extrados voisines de ce dernier et dont une face transversale longitudinale forme le bord avant de ladite fente ;
- un second longeron qui est séparé dudit premier longeron par ladite fente et dont une face transversale longitudinale forme le bord arrière de ladite fente ;
- une coque formant l'intrados et l'extrados de ladite pale, fendue longitudinalement par ladite fente et enveloppant lesdits premier et second longeron en en étant solidaire ;
- une matière de remplissage de ladite coque ;
- les moyens de vrillage dynamique comprennent un actionneur de vrillage dynamique apte à provoquer un coulissement relatif, entre les bords de ladite fente ; et
- ladite coque est réalisée en une matière composite fibres-résine dont au moins la majeur partie des fibres sont disposées de façon à former un angle sensiblement égal à 0° avec l'envergure de ladite pale.

Avantageusement, selon un cinquième mode de réalisation, l'invention est une pale selon le mode de réalisation précédent, **caractérisée en ce que** de part et d'autre de ladite fente, au voisinage de celle-ci, ladite coque est solidarisée de façon rigide avec lesdits premier et second longerons et en ce que, en dehors du voisinage de ladite fente, ladite coque est reliée au reste de ladite pale par une liaison dans une matière élastique de facteur d'amortissement supérieur à 10%, apte à filtrer les vibrations de la pale, comme par exemple de l'élastomère, et répartie, de façon continue ou discontinue, entre ladite coque et ledit reste de la pale.

Ainsi, en dehors du voisinage de la fente, on obtient une liaison (continue ou discrète) à faible module d'élasticité et amortissement adapté permettant :
- de réduire fortement la rigidité en torsion tout en conservant les rigidités de battement et de traînée,
- de minimiser la fréquence du premier mode propre de torsion de la pale relativement proche de la fréquence de rotation, et
- d'obtenir un amortissement de ce mode de torsion, tel que le couplage éventuel avec les premiers modes de battement et de traînée ne soit pas un couplage aéroélastique instable.

Par ailleurs, au voisinage de ladite fente, la liaison rigide, par exemple par collage, assure une bonne transmission du mouvement de l'actionneur permettant un vrillage aisé de la pale.

Avantageusement, selon un sixième mode de réalisation, l'invention est une pale selon le quatrième ou le cinquième mode de réalisation précédent, **caractérisée en ce que** ladite matière de remplissage est une mousse à rigide à semi-rigide.

Cette matière de remplissage rigide à semi-rigide permet par ailleurs d'augmenter le filtrage des vibrations (lesdits modes de déformation) de la pale.

Avantageusement, selon un septième mode de réalisation, l'invention est une pale selon l'un des quatrième au sixième modes de réalisation précédents, caractérisée en ce qu'elle comprend une bande d'une matière élastique de facteur d'amortissement supérieur à 10%, apte à filtrer la fréquence propre de torsion de la pale, comme par exemple de l'élastomère, ladite bande comblant la fente.

Avantageusement, selon un huitième mode de réalisation, l'invention est une pale selon l'un des quatrième au septième modes de réalisation précédents, **caractérisée en ce que** l'actionneur de vrillage dynamique est disposé à l'extrémité libre de celle-ci, de manière à faciliter son installation et sa maintenance.

Dans chaque pale, l'actionneur associé peut être électrique, mécanique ou hydraulique. Toutefois, de préférence, il est de type piézoélectrique semblable à l'actionneur décrit dans le document WO 2009/103865.

Quelle que soit sa nature, l'actionneur peut être disposé le long de la partie aérodynamique de la pale ou sur la partie d'attache de celle-ci.

Cependant, de préférence, dans chaque pale, l'actionneur est disposé à l'extrémité libre de celle-ci, de manière à faciliter son installation et sa maintenance.

Par ailleurs, il peut être avantageux que le profil de chaque pale soit adapté (voire piloté), notamment en fonction de l'incidence et de la rigidité apparente de la pale.

Avantageusement, selon un neuvième mode de réalisation, l'invention est une pale selon l'un des premier au huitième modes de réalisation, **caractérisée en ce que** les moyens de vrillage dynamique sont dimensionnés pour permettre d'obtenir, aux fréquences multiples de la fréquence de rotation dudit rotor et en synchronisme avec l'azimut de rotation de ladite pale, une amplitude dudit angle de vrillage dynamique élastique au moins égale, en valeur absolue, à l'amplitude maximale des différents modes de déformation à ces mêmes fréquences multiples de la fréquence de rotation, de sorte à pouvoir réaliser du contrôle actif multi-cyclique des vibrations.

Avantageusement, selon un dixième mode de réalisation, l'invention est une pale selon l'un des premier au neuvième modes de réalisation, **caractérisée en ce que** sa partie d'attache au moyeu comprend des moyens de commande progressive de sa fréquence propre, sous force centrifuge, de torsion autour de son envergure, aptes à asservir, pendant sa rotation autour dudit moyeu, ladite fréquence propre de torsion sensiblement sur la fréquence de rotation du rotor.

Avantageusement, selon un onzième mode de réalisation, l'invention est une pale selon le dixième mode de réalisation, **caractérisée en ce que** lesdits moyens de commande progressive de sa fréquence propre, ajustent ladite fréquence propre en ajustant la rigidité, apparente sous force centrifuge, de torsion approximativement autour de son envergure, de sa partie d'attache.

Avantageusement, selon un douzième mode de réalisation, l'invention est un rotor dont la voilure tournante en rotation autour de son moyeu à la fréquence de rotation, comprise entre une fréquence de rotation inférieure et une fréquence de rotation supérieure, comporte au moins deux pales, selon l'un des modes de réalisation précédents, dont les azimuts de rotation sont connus, ledit rotor étant caractérisé en ce qu'il comporte :
■ des moyens de commande des moyens de vrillage dynamique de chacune desdites pales, aptes, même en l'absence de plateau cyclique, à commander en temps réel, c'est-à-dire à une fréquence au moins égale à la fréquence de rotation, pendant la rotation desdites pales et en synchronisme avec leur azimut de rotation, un pas cyclique pour chacune desdites pales ;
■ des moyens de commande progressive de la fréquence propre, sous la force centrifuge, de torsion de chacune desdites pales autour de leur envergure, aptes à asservir, pendant cette rotation, chaque dite fréquence propre de torsion sensiblement sur la fréquence de rotation du rotor, de sorte à tirer profit de la résonance de torsion autour de leur envergure afin de minimiser la puissance nécessaire à la génération d'un pas cyclique par vrillage dynamique.

Avantageusement, selon un treizième mode de réalisation, l'invention est un rotor selon le douzième mode de réalisation précédent, **caractérisé en ce que** lesdits moyens de commande des moyens de vrillage dynamique sont également aptes, en l'absence de plateau cyclique, à commander le pas collectif desdites pales pendant la rotation dudit rotor.

Avantageusement, selon un quatorzième mode de réalisation, l'invention est un rotor selon l'un des douzième au treizième modes de réalisation précédents, **caractérisé en ce que** lesdits moyens de commande progressive de la fréquence propre de torsion sont aptes à ajuster, dans les deux sens, la fréquence propre, sous force centrifuge, de torsion, autour de son envergure, de chacune desdites pales, entre une valeur minimale correspondant à la fréquence de rotation inférieure du rotor et une valeur maximale correspondant à la fréquence de rotation supérieure dudit rotor, lesdits moyens pouvant être par exemple des moyens de rigidification de la partie d'attache de chaque dite pale selon l'une des revendications 2 à 10 permettant d'ajuster la rigidité, apparente sous force centrifuge, de torsion de chaque dite pale autour de son envergure, entre une valeur minimale correspondant à ladite rigidité de chaque dite pale non rigidifiée par lesdits moyens, et une valeur maximale correspondant à ladite rigidité de la partie aérodynamique de chaque dite pale.

Avantageusement, selon un quinzième mode de réalisation, l'invention est un rotor selon l'un des douzième au quatorzième modes de réalisation précédents, **caractérisé en ce qu'**il comporte des moyens d'action spontanés aptes à imposer à chacune desdites pales, en cas de défaillance desdits moyens de commande, que ladite fréquence propre sous force centrifuge de torsion de chaque dite pale soit égale à la fréquence propre de torsion sous force centrifuge de leur partie aérodynamique, de sorte à éviter toute divergence de résonance de torsion desdites pales.

Avantageusement, selon un seizième mode de réalisation, l'invention est un procédé de vrillage dynamique d'au moins une pale d'une voilure tournant autour du moyeu d'un rotor de fréquence de rotation, comprise entre une fréquence de rotation inférieure et une fréquence de rotation supérieure, ladite pale, dont l'azimut de rotation est connu, ayant une envergure, comportant une partie d'attache audit moyeu et une partie aérodynamique, et ayant différents modes de déformation notamment un mode de torsion autour de son envergure de fréquence propre fonction de sa rigidité de torsion autour de ladite envergure, caractérisé en ce qu'il comporte les taches suivantes :
- commander en temps réel par des moyens de vrillage dynamique, c'est-à-dire à une fréquence au moins égale à la fréquence de rotation dudit rotor, pendant la rotation de chaque dite pale et en synchronisme avec l'azimut de rotation de chaque dite pale, l'angle de vrillage dynamique élastique (v) de la corde dans le plan de section droite de l'extrémité libre de chaque dite pale, d'au moins 14° piqueur ou cabreur, de sorte à ce que ces moyens de vrillage dynamique puissent générer un pas cyclique même en absence de plateau cyclique ;
- commander, à l'aide des moyens, la fréquence propre, apparente sous force centrifuge, de torsion, approximativement autour de l'envergure de chaque dite pale, de sorte à ce qu'elle soit sensiblement égale à la fréquence de rotation dudit rotor et que par conséquent ledit vrillage dynamique élastique soit obtenu avec un minimum de puissance par résonance de torsion ; et
- filtrer les fréquences propres des différents modes de déformation de chaque dite pale, afin d'éviter leur divergence de résonance.

Avantageusement, selon un dix-septième mode de réalisation, l'invention est un procédé selon le seizième mode de réalisation précédent, **caractérisé en ce que** la commande des moyens de vrillage dynamique est multi-cyclique, c'est-à-dire à une fréquence multiple de la fréquence de rotation dudit rotor, de manière à contrôler activement les différents modes de déformation desdites pales en plus de commander leur pas cyclique.

Avantageusement, selon un dix-huitième mode de réalisation, l'invention est un procédé selon l'un des seizième au dix-septième modes de réalisation précédents, **caractérisé en ce que** la commande des moyens de vrillage dynamique commande le pas collectif desdites pales en plus de commander leur pas cyclique.

Avantageusement, selon un dix-neuvième mode de réalisation, l'invention est un procédé selon l'un des seizième au dix-huitième modes de réalisation précédents, **caractérisé en ce que** la commande de la fréquence propre, apparente sous force centrifuge, de torsion, approximativement autour de son envergure, de chaque dite pale, est obtenue par la commande progressive de la rigidité apparente sous force centrifuge, de torsion, approximativement autour de son envergure, de la partie d'attache de chaque dite pale, ladite partie d'attache, plus souple que la partie aérodynamique correspondante, pouvant être rigidifiée jusqu'à une valeur maximale égale à la rigidité apparente de torsion, autour de son envergure, de ladite partie aérodynamique.

Avantageusement, selon un vingtième mode de réalisation, l'invention est un procédé selon l'un des seizième au dix-neuvième modes de réalisation précédents, **caractérisé en ce qu'**il comprend une tache imposant, en cas de défaillance desdits moyens de commande, que la fréquence propre sous force centrifuge de torsion de chaque dite pale autour de son envergure, soit égale à la fréquence propre sous force centrifuge de torsion de leur partie aérodynamique autour de leur envergure, de sorte à éviter toute divergence de résonance de torsion desdites pales.
Les figures du dessin annexé feront bien comprendre comment l'invention peut être réalisée. Sur ces figures, de références identiques désignent des éléments semblables.
La figure 1 est une vue en perspective schématique d'un rotor de voilure tournante d'hélicoptère.
La figure 2 est une vue en perspective, du côté de l'intrados, d'une pale de rotor de voilure tournante d'hélicoptère conforme à la présente invention.
La figure 3 est une coupe transversale schématique de la pale de la figure 2, selon la ligne III-III de cette dernière figure.
La figure 4 est une vue en perspective agrandie éclatée de l'extrémité de la pale de la figure 2, vue du côté de l'extrados.
La figure 5 illustre en perspective schématique le vrillage de la pale de la figure 2 engendré par l'actionneur de bout de pale visible sur la figure 4.
La figure 6 illustre schématiquement des moyens de commande aptes à ajuster progressivement la fréquence propre de torsion de chaque pale du rotor conforme à la présente invention.
Les figures 7A et 7B illustrent, en coupes schématiques, le fonctionnement des moyens de commande de la figure 6, ceux-ci étant respectivement dans une position correspondant au verrouillage en fréquence propre de torsion maximale (figure 7A) et au déverrouillage avec fréquence propre de torsion minimale (figure 7B).

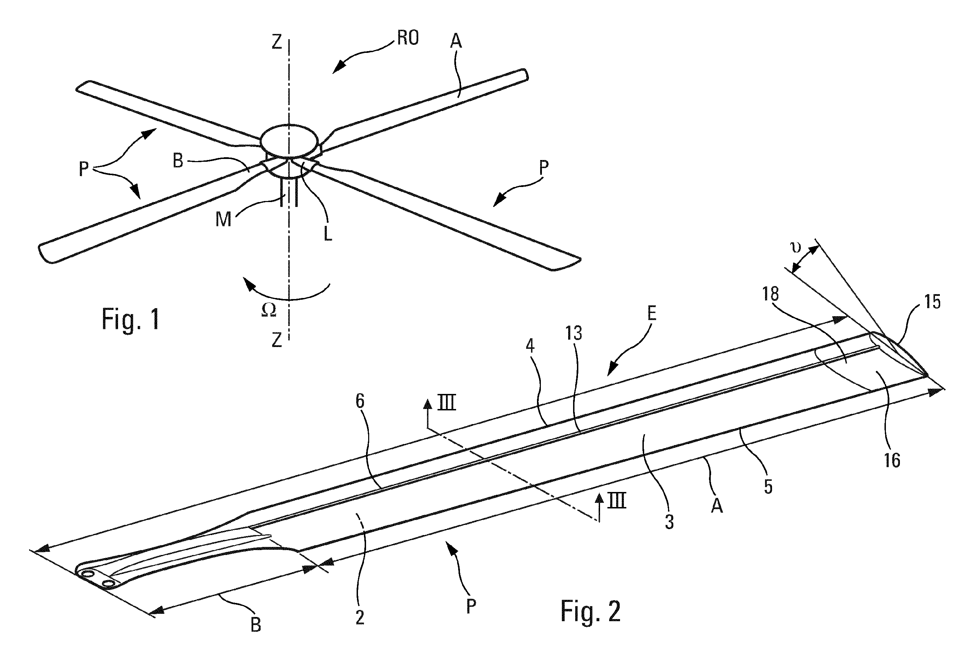

Le rotor RO de voilure tournante pour hélicoptère, représenté schématiquement sur la figure 1, comporte un moyeu M entraîné en rotation autour de son axe Z-Z par une boîte de transmission principale (non représentée) et des pales P reliées transversalement audit moyeu M par des dispositifs d'attache L. Ainsi, les pales P peuvent tourner autour de l'axe Z-Z, à la fréquence de rotation Ω dudit moyeu M.

Comme le montre la figure 2, une pale P conforme à la présente invention comporte une partie aérodynamique A et une partie d'attache B, plus courte que ladite partie A.

La partie d'attache B, par exemple de section cruciforme, coopère avec le dispositif d'attache L pour fixer la pale P au moyeu M.

La partie aérodynamique A comporte un extrados 2 et un intrados 3 formant, à l'avant, un bord d'attaque 4 et, à l'arrière, un bord de fuite 5.

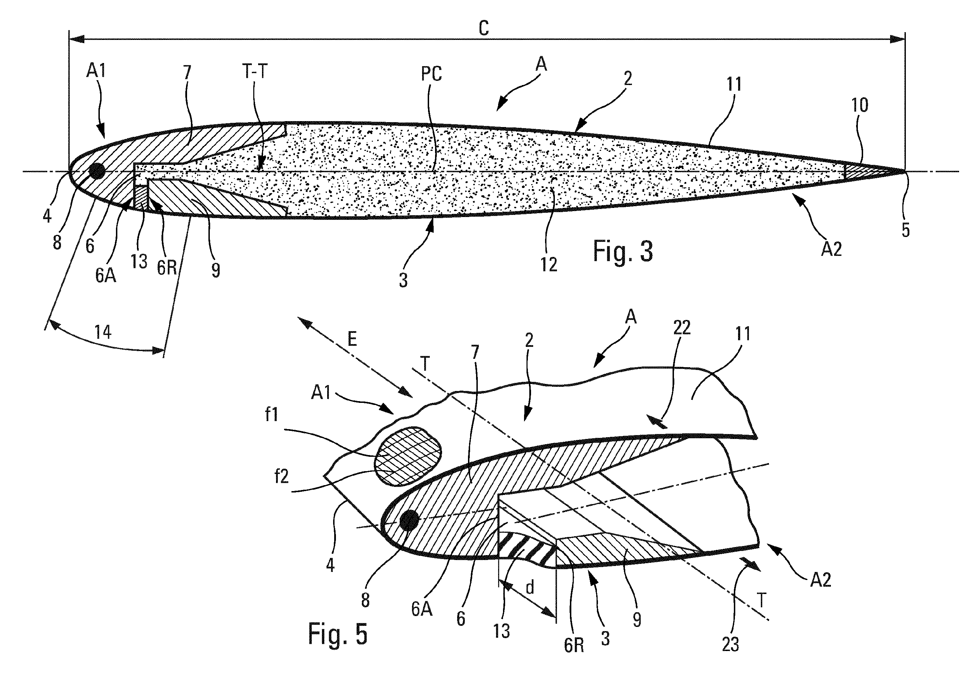

Au voisinage du bord d'attaque 4 (voir également la figure 3), l'intrados 3 est coupé par une fente longitudinale 6 partageant longitudinalement ladite partie aérodynamique A (selon l'envergure E) en une partie longitudinale avant A1 comprenant ledit bord d'attaque 4 et en une partie longitudinale arrière A2 comprenant ledit bord de fuite 5. En revanche, lesdites parties longitudinales avant A1 et arrière A2 sont solidaires l'une de l'autre par l'extrados 2 qui est continu.

Dans l'exemple de réalisation représenté sur la figure 3, ladite partie aérodynamique A comporte :
- un longeron de bord d'attaque 7, formant ledit bord d'attaque 4 et les parties de l'extrados 2 et de l'intrados 3 voisines de ce dernier ; ce longeron 7 peut être réalisé en une matière composite fibres-résine (par exemple verre-époxy ou carbone-époxy) et éventuellement incorporer une masse de ballastage 8, allongée selon ledit bord d'attaque 4 ;
- un longeron d'intrados 9, séparé dudit longeron de bord d'attaque 7 par ladite fente longitudinale d'intrados 6, le bord avant 6A de celle-ci étant formé par une face transversale longitudinale du longeron de bord d'attaque 7 alors que le bord arrière 6R de ladite fente longitudinale 6 est formé par une face transversale longitudinale dudit longeron d'intrados 9 ; celui-ci peut également être réalisé en une matière composite fibres-résine ;
- un longeron d'arêtier 10 formant le bord de fuite 5, et par exemple réalisé en matière composite fibres-résine ;
- une coque 11 formant l'extrados 2 et l'intrados 3 (interrompu par la fente 6) et enveloppant les longerons 7, 9 et 10, en en étant solidaire ;
- une matière de remplissage 12, par exemple en une mousse rigide à faible module d'élasticité (par exemple en polyuréthane), remplissant ladite coque 11 entre lesdits longerons 7, 9 et 10 ; et
- une bande 13 d'une matière élastomère à faible module d'élasticité, obturant la fente 6 et étant solidaire (de préférence par collage) des bords 6A et 6R de cette dernière.

La coque 11 est réalisée en une matière fibres-résine (par exemple des fibres de carbone) et ces fibres f1 sont disposées de façon longitudinale par rapport à ladite partie aérodynamique de la pale, c'est-à-dire selon ladite envergure E. Eventuellement, ladite coque peut comporter des fibres f2 orthogonales à ladite envergure, mais elle ne comporte aucune fibre inclinée sur cette dernière (voir l'écorché schématique de la coque 11 représenté sur la figure 5).

De plus, dans une zone 14 voisine de la fente 6 et s'étendant de part et d'autre de celle-ci, la coque 11 est solidarisée de façon rigide, par exemple par collage, dudit longeron du bord d'attaque 7 et dudit longeron d'intrados 9. En revanche, en dehors de la zone 14, la coque 11 est reliée aux longerons 7, 9, 10 et à la matière de remplissage 12 par une couche de liaison d'une matière amortissante à faible module d'élasticité. Une telle couche de liaison (non représentée pour des raisons de clarté de dessin) peut être continue ou discontinue et être constituée d'une matière élastomère.

On comprendra aisément qu'on obtient ainsi une partie aérodynamique A peu rigide en torsion autour de l'envergure E, avec toutefois une solidarisation rigide, localisée autour de la fente 6, entre le longeron de bord d'attaque 7 et le longeron d'intrados 9, d'une part, et la coque 11, d'autre part. En choisissant une partie d'attache B encore moins rigide en torsion autour de l'envergure que ladite partie aérodynamique A, (par exemple de 10 à 100 fois inférieure), la pale P est apte à subir une torsion produisant en bout de pale, c'est-à-dire à la face 15 de l'extrémité libre 16 de celle-ci, un angle de vrillage dynamique élastique v d'au moins 14°.

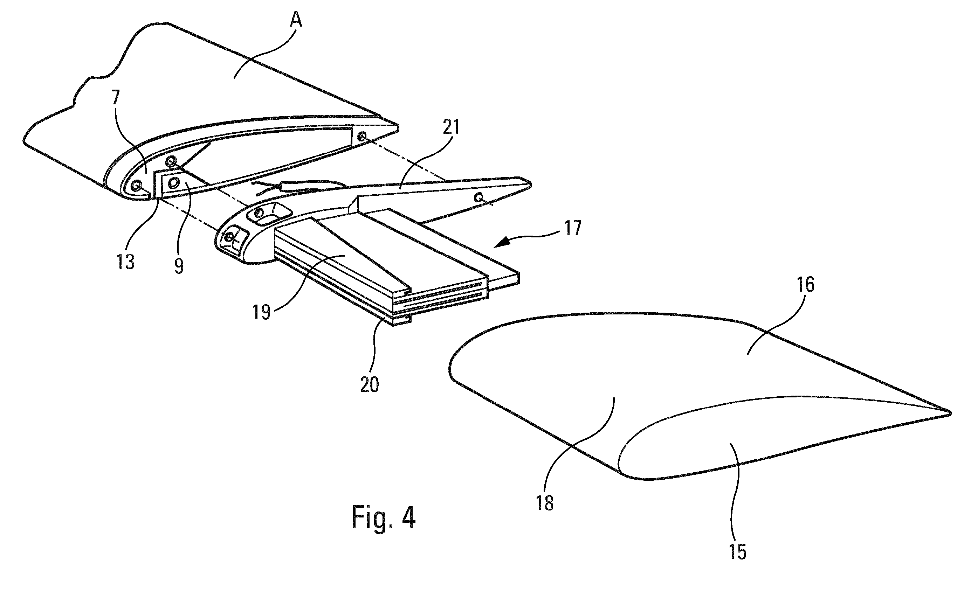

Par ailleurs, à l'extrémité libre 16 de la pale P, est rapporté un actionneur 17 en prolongement de la partie aérodynamique A (voir la figure 4). L'actionneur 17 est piézoélectrique et semblable à celui décrit dans le document EP - 1 788 646, auquel il est ici expressément renvoyé. Lorsque l'actionneur piézoélectrique 17 est fixé en bout de la partie aérodynamique A, il se trouve au moins en partie dans le plan de corde PC de celle-ci. Un capot amovible 18 enferme et protège l'actionneur piézoélectrique 17 en formant l'extrémité libre 16 et la face d'extrémité 15 de la pale P.

L'actionneur piézoélectrique 17 agit en cisaillement et il comporte deux surfaces 19 et 20, aptes à coulisser l'une par rapport à l'autre lorsque ledit actionneur est alimenté électriquement. Par l'intermédiaire d'une pièce de raccord 21, la surface 19 est solidarisée du longeron de bord d'attaque 7, alors que la surface 20 est solidarisée du longeron d'intrados 9.

Ainsi, comme l'illustre la figure 5, lorsque ledit actionneur 17 est activé, il engendre un coulissement d entre lesdites surfaces 19 et 20, ce coulissement étant dirigé selon l'envergure E et étant transmis aux longerons 7 et 9 qui se déplacent l'un par rapport à l'autre. II en résulte donc un déplacement relatif entre la partie avant A1 et la partie arrière A2 (schématisé par les flèches 22 et 23 sur la figure 5) et un gauchissement de la coque 11 se traduisant par une déformation en torsion de la pale P autour d'un axe de torsion T-T disposé dans le plan de corde PC et dirigé selon l'envergure E. Bien entendu, la bande 13 subit également une déformation par cisaillement (voir figure 5).

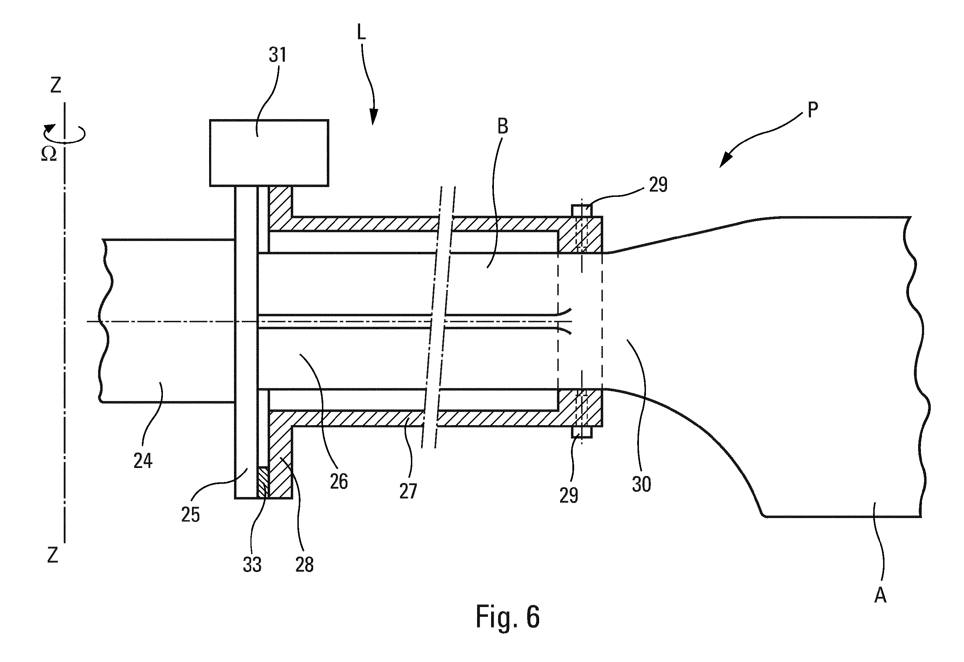

Sur la figure 6, on a représenté schématiquement un exemple de réalisation d'un dispositif d'attache L pour une pale P, afin que celle-ci puisse tourner autour de l'axe Z-Z du rotor RO. Dans cet exemple de réalisation, le dispositif d'attache L comporte :
- un moyeu de pale 24 rendu solidaire du moyeu M du rotor RO par tout moyen connu, non représenté ;
- une bride (ou portion de bride) 25 solidaire en rotation, d'un côté, dudit moyeu de pale 24 et, de l'autre, de l'extrémité interne 26 de la partie d'attache B de la pale P ;
- un manchon (ou portion de manchon) rigide 27 entourant, avec un jeu important, ladite partie d'attache B, ledit manchon 27, d'un côté, comportant une bride (ou portion de bride) 28 disposée en regard de la bride 25 et, de l'autre côté, étant rendu solidaire, par des moyens de fixation 29, de la partie de pale 30 faisant la transition entre la partie aérodynamique A et la partie d'attache B ; et
- au moins un dispositif 31 apte à faire varier progressivement la pression entre les brides 25 et 28.

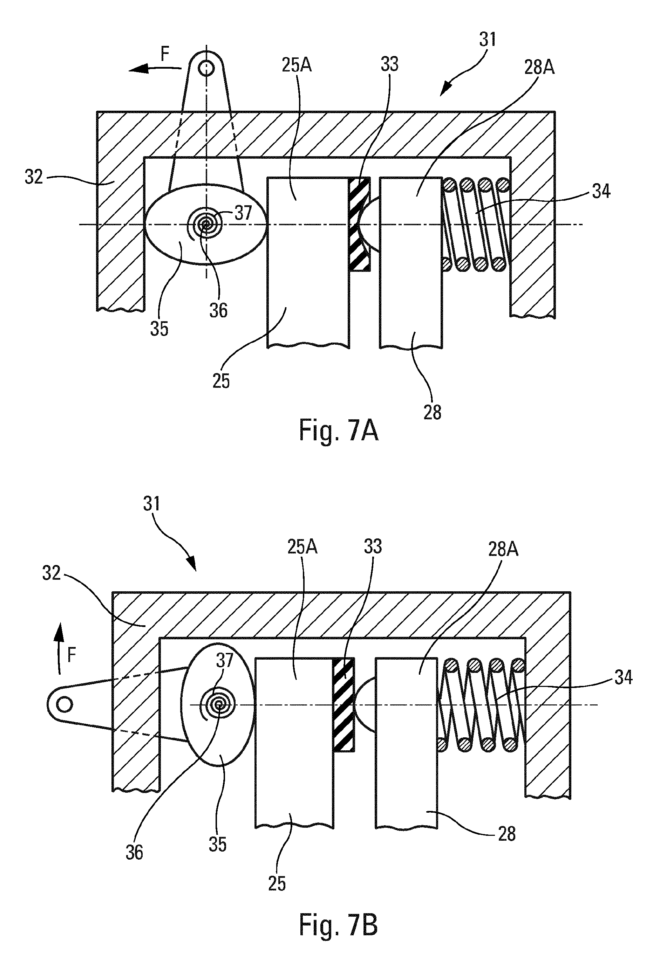

Comme le montrent les figures 7A et 7B, les périphéries 25A et 28A des brides 25 et 28, aptes à subir une légère déformation élastique, sont disposées à l'intérieur d'un étrier mobile 32 du dispositif 31 et au contact l'une de l'autre par l'intermédiaire de blocs élastiques 33, interposés entre elles.

Les périphéries 25A et 28A sont soumises, d'un côté, à l'action d'un ressort 34 et, de l'autre, à l'action d'une came commandable 35, ledit ressort 34 et ladite came 35 prenant appui sur l'étrier mobile 32 pour exercer des actions antagonistes sur lesdites périphéries 25A et 28A.

La came 35 est montée rotative autour d'un axe 36 monté sur l'étrier 31 et elle peut tourner autour dudit axe sous la commande d'un actionneur représenté par des flèches F.

Un ressort de rappel 37 est apte à amener la came 35 dans la position de la figure 7A en cas de défaillance de l'actionneur de came F.

Dans la situation représentée sur la figure 7A, la came 35 presse les périphéries 25A et 28A en comprimant le ressort 34, de sorte que la pression entre les brides 25 et 28 est importante. Dans ce cas, le manchon 27 est rendu solidaire du moyeu de pale 24 et l'actionneur en vrillage 17 ne peut exercer aucune action sur la partie d'attache de pale B, seule la partie aérodynamique A pouvant être vrillée. II en résulte bien évidemment que la fréquence propre de torsion de la pale P est alors maximale et identique à celle de ladite partie aérodynamique A.

En revanche, dans la situation représentée sur la figure 7B, le ressort 34 est détendu et appuie les périphéries 25A et 28A contre la came 35, de sorte que la pression entre les brides 25 et 28 est faible, sinon nulle. Le manchon 27 est donc désolidarisé du moyeu de pale 24 et l'actionneur en vrillage 17 peut exercer son action sur la totalité des parties A et B de la pale. La fréquence propre de torsion de la pale P est alors minimale.

Bien entendu, par commande en rotation de la came 35 autour de son axe 36 entre les positions illustrées par les figures 7A et 7B, on peut faire varier progressivement, dans les deux sens, la fréquence propre de torsion de la pale P entre cette valeur minimale correspondant à la fréquence propre de torsion de la pale complète comportant ses parties A et B et la valeur maximale correspondant à la fréquence propre de torsion de la seule partie aérodynamique A.

Par ailleurs, on remarquera qu'en cas de défaillance de l'actionneur F ou de l'actionneur 17, par exemple par défaut d'alimentation électrique, ou encore en cas d'apparition de divergence dans le vrillage de la pale, le ressort de rappel 37 ramène automatiquement à la situation de la figure 7A, correspondant à la fréquence propre de torsion maximale.

## Revendications

1. Pale (P), d'une voilure tournant autour du moyeu (M) d'un rotor (RO) de fréquence de rotation (Ω), ladite pale (P), dont l'azimut de rotation est connu, d'envergure (E), comportant une partie (B) d'attache audit moyeu (M) et une partie aérodynamique (A), et ayant différents modes de déformation notamment un mode de torsion autour de son envergure (E) de fréquence propre fonction de sa rigidité de torsion autour de ladite envergure (E), ladite pale comportant des moyens de vrillage dynamique (17), approximativement autour de son envergure (E), pouvant être actionnés en temps réel, c'est-à-dire pendant sa rotation autour dudit moyeu, au moins à la fréquence de rotation (Ω) dudit rotor et en synchronisme avec l'azimut de rotation de ladite pale, de sorte à ce que ces moyens de vrillage dynamique (17) puissent générer un pas cyclique même en absence de plateau cyclique ;
**caractérisée en ce que**
- sa rigidité, apparente sous force centrifuge, de torsion approximativement autour de son envergure (E), est suffisamment faible pour permettre, auxdits moyens de vrillage dynamique (17), d'obtenir, dans le plan de section droite de l'extrémité libre de ladite pale, un angle de vrillage dynamique élastique (v) de la corde d'au moins 14° piqueur ou cabreur, tout en restant suffisamment élevée pour que la fréquence propre de torsion de la pale autour de son envergure soit égale à la fréquence de rotation (Ω) dudit rotor, de façon à permettre un vrillage dynamique de la pale par résonance de torsion et donc de minimiser l'énergie nécessaire à la génération du pas cyclique ;
- son facteur d'amortissement, sous force centrifuge, est strictement positif, afin d'éviter la divergence de résonance des différents modes.

2. Pale selon la revendication 1, **caractérisée en ce que** ladite partie d'attache (B) présente une rigidité apparente de torsion de 10 à 100 fois inférieure à celle de la partie aérodynamique (A).

3. Pale selon l'une des revendications 1 ou 2, **caractérisée en ce que** :
- sa structure est en matériau composite ;
- son revêtement est unidirectionnel et la direction de ce revêtement forme un angle sensiblement égal à 0° avec l'envergure de ladite pale, de sorte à obtenir une rigidité de torsion minimale de la pale autour de son envergure.

4. Pale selon l'une des revendications 1 à 3, **caractérisée en ce que** la partie aérodynamique (A) est pourvue d'une fente longitudinale (6) dans l'une de ses surfaces d'intrados (3) ou d'extrados (2) et comporte :
• un premier longeron (7) qui forme le bord d'attaque (4) et les parties d'intrados et d'extrados voisines de ce dernier et dont une face transversale longitudinale forme le bord avant (6A) de ladite fente (6) ;
• un second longeron (9) qui est séparé dudit premier longeron (7) par ladite fente (6) et dont une face transversale longitudinale forme le bord arrière (6R) de ladite fente (6) ;
• une coque (11) formant l'intrados (3) et l'extrados (2) de ladite pale, fendue longitudinalement par ladite fente (6) et enveloppant lesdits premier et second longeron (7, 9) en en étant solidaire ;
• une matière (12) de remplissage de ladite coque (11) ;
• les moyens de vrillage dynamique (17) comprennent un actionneur de vrillage dynamique apte à provoquer un coulissement relatif, entre les bords (6A, 6R) de ladite fente ; et
• ladite coque (11) est réalisée en une matière composite fibres-résine dont au moins la majeur partie des fibres sont disposées de façon à former un angle sensiblement égal à 0° avec l'envergure de ladite pale.

5. Pale selon la revendication 4, **caractérisée en ce que**, de part et d'autre de ladite fente (6), au voisinage (14) de celle-ci, ladite coque (11) est solidarisée de façon rigide avec lesdits premier et second longerons (7, 9) et **en ce que**, en dehors du voisinage (14) de ladite fente (6), ladite coque est reliée au reste de ladite pale par une liaison dans une matière élastique de facteur d'amortissement supérieur à 10%, apte à filtrer les vibrations de la pale, comme par exemple de l'élastomère, et répartie, de façon continue ou discontinue, entre ladite coque et ledit reste de la pale.

6. Pale selon l'une des revendications 4 ou 5, **caractérisée en ce que** ladite matière de remplissage (12) est une mousse rigide à semi-rigide.

7. Pale selon l'une des revendications 4 à 6, **caractérisée en ce qu'**elle comprend une bande (13) d'une matière élastique de facteur d'amortissement supérieur à 10%, apte à filtrer la fréquence propre de torsion de la pale, comme par exemple de l'élastomère, ladite bande comblant la fente (6).

8. Pale selon l'une des revendications 4 à 7, **caractérisée en ce que** l'actionneur de vrillage dynamique (17) est disposé à l'extrémité libre de celle-ci, de manière à faciliter son installation et sa maintenance.

9. Pale selon l'une des revendications 1 à 8, **caractérisée en ce que** les moyens de vrillage dynamique (17) sont dimensionnés pour permettre d'obtenir, aux fréquences multiples de la fréquence de rotation (Ω) dudit rotor et en synchronisme avec l'azimut de rotation de ladite pale, une amplitude dudit angle de vrillage dynamique élastique (v) au moins égale, en valeur absolue, à l'amplitude maximale des différents modes de déformation à ces mêmes fréquences multiples de la fréquence de rotation (Ω), de sorte à pouvoir réaliser du contrôle actif multi-cyclique des vibrations.

10. Pale selon l'une des revendications 1 à 9, **caractérisée en ce que** sa partie d'attache (B) au moyeu (M) comprend des moyens (25 à 31) de commande progressive de sa fréquence propre, sous force centrifuge, de torsion autour de son envergure (E), aptes à asservir, pendant sa rotation autour dudit moyeu, ladite fréquence propre de torsion sensiblement sur la fréquence de rotation (Ω) du rotor.

11. Pale selon la revendication 10, **caractérisée en ce que** lesdits moyens (25 à 31) de commande progressive de sa fréquence propre, ajustent ladite fréquence propre en ajustant la rigidité, apparente sous force centrifuge, de torsion approximativement autour de son envergure (E), de sa partie d'attache (B).

12. Rotor (RO) dont la voilure tournante en rotation autour de son moyeu (M) à la fréquence de rotation (Ω), comprise entre une fréquence de rotation inférieure et une fréquence de rotation supérieure, comporte au moins deux pales (P) selon l'une des revendications 1 à 11 dont les azimuts de rotation sont connus, ledit rotor **caractérisé en ce qu'**il comporte :
■ des moyens de commande des moyens de vrillage dynamique (17) de chacune desdites pales, aptes, même en l'absence de plateau cyclique, à commander en temps réel, c'est-à-dire à une fréquence au moins égale à la fréquence de rotation (Ω), pendant la rotation desdites pales et en synchronisme avec leur azimut de rotation, un pas cyclique pour chacune desdites pales ;
■ des moyens (25 à 31) de commande progressive de la fréquence propre, sous la force centrifuge, de torsion de chacune desdites pales (P) autour de leur envergure (E), aptes à asservir, pendant cette rotation, chaque dite fréquence propre de torsion sensiblement sur la fréquence de rotation (Ω) du rotor, de sorte à tirer profit de la résonance de torsion autour de leur envergure afin de minimiser la puissance nécessaire à la génération d'un pas cyclique par vrillage dynamique.

13. Rotor selon la revendication 12, **caractérisé en ce que** lesdits moyens de commande des moyens de vrillage dynamique (17) sont également aptes, en l'absence de plateau cyclique, à commander le pas collectif desdites pales pendant la rotation dudit rotor.

14. Rotor selon l'une des revendications 12 ou 13, **caractérisé en ce que** lesdits moyens (25 à 31) de commande progressive de la fréquence propre de torsion sont aptes à ajuster, dans les deux sens, la fréquence propre, sous force centrifuge, de torsion, autour de son envergure, de chacune desdites pales (P), entre une valeur minimale correspondant à la fréquence de rotation inférieure du rotor et une valeur maximale correspondant à la fréquence de rotation supérieure dudit rotor, lesdits moyens (25 à 31) pouvant être par exemple des moyens de rigidification de la partie d'attache (B) de chaque dite pale selon l'une des revendications 2 à 10 permettant d'ajuster la rigidité, apparente sous force centrifuge, de torsion de chaque dite pale autour de son envergure, entre une valeur minimale correspondant à ladite rigidité de chaque dite pale non rigidifiée par lesdits moyens (25 à 31), et une valeur maximale correspondant à ladite rigidité de la partie aérodynamique (A) de chaque dite pale.

15. Rotor selon l'une des revendications 12 à 14, **caractérisé en ce qu'**il comporte des moyens d'action spontanés (37) aptes à imposer à chacune desdites pales, en cas de défaillance desdits moyens de commande (25 à 31), que ladite fréquence propre sous force centrifuge de torsion de chaque dite pale soit égale à la fréquence propre de torsion sous force centrifuge de leur partie aérodynamique (A), de sorte à éviter toute divergence de résonance de torsion desdites pales.

16. Procédé de vrillage dynamique d'au moins une pale (P) d'une voilure tournant autour du moyeu (M) d'un rotor (RO) de fréquence de rotation (Ω), comprise entre une fréquence de rotation inférieure et une fréquence de rotation supérieure, ladite pale (P), dont l'azimut de rotation est connu, ayant une envergure (E), comportant une partie (B) d'attache audit moyeu (M) et une partie aérodynamique (A), et ayant différents modes de déformation notamment un mode de torsion autour de son envergure (E) de fréquence propre fonction de sa rigidité de torsion autour de ladite envergure (E), **caractérisé en ce qu'**il comporte les taches suivantes :
- commander en temps réel par des moyens de vrillage dynamique (17), c'est-à-dire à une fréquence au moins égale à la fréquence de rotation (Ω) dudit rotor, pendant la rotation de chaque dite pale (P) et en synchronisme avec l'azimut de rotation de chaque dite pale, l'angle de vrillage dynamique élastique (v) de la corde dans le plan de section droite de l'extrémité libre de chaque dite pale, d'au moins 14° piqueur ou cabreur, de sorte à ce que ces moyens de vrillage dynamique (17) puissent générer un pas cyclique même en absence de plateau cyclique ;
- commander, à l'aide des moyens (25 à 31), la fréquence propre, apparente sous force centrifuge, de torsion, approximativement autour de l'envergure (E) de chaque dite pale (P), de sorte à ce qu'elle soit sensiblement égale à la fréquence de rotation (Ω) dudit rotor (RO) et que par conséquent ledit vrillage dynamique élastique (v) soit obtenu avec un minimum de puissance par résonance de torsion ; et
- filtrer les fréquences propres des différents modes de déformation de chaque dite pale (P), afin d'éviter leur divergence de résonance.

17. Procédé de vrillage selon la revendication 16 **caractérisé en ce que** la commande des moyens de vrillage dynamique (17) est multi-cyclique, c'est-à-dire à une fréquence multiple de la fréquence de rotation (Ω) dudit rotor (RO), de manière à contrôler activement les différents modes de déformation desdites pales en plus de commander leur pas cyclique.

18. Procédé de vrillage selon l'une des revendications 16 ou 17 **caractérisé en ce que** la commande des moyens de vrillage dynamique (17) commande le pas collectif desdites pales (P) en plus de commander leur pas cyclique.

19. Procédé de vrillage selon l'une des revendications 16 à 18 **caractérisé en ce que** la commande de la fréquence propre, apparente sous force centrifuge, de torsion, approximativement autour de son envergure (E), de chaque dite pale (P), est obtenue par la commande progressive de la rigidité apparente sous force centrifuge, de torsion, approximativement autour de son envergure (E), de la partie d'attache (B) de chaque dite pale (P), ladite partie d'attache (B), plus souple que la partie aérodynamique (A) correspondante, pouvant être rigidifiée jusqu'à une valeur maximale égale à la rigidité apparente de torsion, autour de son envergure (E), de ladite partie aérodynamique.

20. Procédé de vrillage selon l'une des revendications 16 à 19 **caractérisé en ce qu'**il comprend une tache imposant, en cas de défaillance desdits moyens de commande (25 à 31), que la fréquence propre sous force centrifuge de torsion de chaque dite pale autour de son envergure, soit égale à la fréquence propre sous force centrifuge de torsion de leur partie aérodynamique (A) autour de leur envergure, de sorte à éviter toute divergence de résonance de torsion desdites pales.

## Patentansprüche

1. Blatt (P) eines Flügels, der sich um die Nabe (M) eines Rotors (RO) mit der Rotationsfrequenz (Ω) dreht, wobei das Blatt (P), dessen Umlaufwinkel bekannt ist, mit Spannweite (E), einen Teil (B) zur Befestigung an der Nabe (M) und einen aerodynamischen Teil (A) umfasst und verschiedene Verformungsmodi aufweist, insbesondere einen Modus zur Eigenfrequenztorsion um seine Spannweite (E) in Abhängigkeit von seiner Torsionssteifigkeit um die Spannweite (E), wobei das Blatt Mittel zur dynamischen Verwindung (17) ungefähr um seine Spannweite (E) umfasst, die in Echtzeit, das heißt während ihrer Rotation um die Nabe mindestens mit einer Rotationsfrequenz (Ω) des Rotors und im Gleichlauf mit dem Umlaufwinkel des Blatts betätigt werden können, so dass diese Mittel zur dynamischen Verwindung (17) sogar in Abwesenheit einer Taumelscheibe eine zyklische Verstellung erzeugen können;
**dadurch gekennzeichnet, dass**
- seine scheinbare Torsionssteifigkeit unter Fliehkraft, ungefähr um seine Spannweite (E) ausreichend gering ist, um es den Mitteln zur dynamischen Verwindung (17) zu ermöglichen, in der Querschnittsebene des freien Endes des Blatts einen Winkel der elastischen, dynamischen Verwindung (v) der Sehne von mindestens 14° nach vorne oder nach hinten zu erhalten und gleichzeitig ausreichend hoch bleibt, damit die Torsionseigenfrequenz des Blatts um seine Spannweite gleich der Rotationsfrequenz (Ω) des Rotors ist, um eine dynamische Verwindung des Blatts durch Torsionsresonanz zu ermöglichen und somit die Energie zu minimieren, die für die Erzeugung der zyklischen Verstellung erforderlich ist;
- sein Dämpfungsfaktor unter Fliehkraft strikt positiv ist, um die Divergenz der Resonanz der verschiedenen Modi zu verhindern.

2. Blatt nach Anspruch 1, **dadurch gekennzeichnet, dass** der Teil zur Befestigung (B) eine scheinbare Torsionssteifigkeit aufweist, die 10 bis 100 Mal kleiner ist als die des aerodynamischen Teils (A).

3. Blatt nach einem der Ansprüche 1 oder 2, **dadurch gekennzeichnet, dass**:
- seine Struktur aus einem Verbundwerkstoff besteht;
- seine Beschichtung unidirektional ist und die Richtung dieser Beschichtung einen Winkel mit der Spannweite des Blatts bildet, der im Wesentlichen gleich 0° ist, um eine minimale Torsionssteifigkeit des Blatts um seine Spannweite zu erhalten.

4. Blatt nach einem der Ansprüche 1 bis 3, **dadurch gekennzeichnet, dass** der aerodynamische Teil (A) mit einem länglichen Spalt (6) in einer seiner Unterseiten- (3) oder Oberseitenflächen (2) versehen ist und umfasst:
- einen ersten Längsträger (7), der die Blattvorderkante (4) und Unterseiten- und Oberseitenteile die dieser benachbart sind, bildet, und wobei eine längliche transversale Seite die Vorderkante (6A) des Spalts (6) bildet;
- einen zweiten Längsträger (9), der von dem ersten Längsträger (7) durch den Spalt (6) getrennt ist und dessen eine längliche transversale Seite die Hinterkante (6R) des Spalts (6) bildet;
- eine Schale (11), die die Unterseite (3) und die Oberseite (2) des Blatts bildet, die in Längsrichtung durch den Spalt (6) gespalten ist, und die den ersten und den zweiten Längsträger (7, 9) umgibt, wobei sie fest mit ihnen verbunden ist;
- ein Material (12) zum Füllen der Schale (11);
- die Mittel zum dynamischen Verwinden (17) umfassen ein Stellglied zum dynamischen Verwinden, das geeignet ist, eine relative Verschiebung zwischen den Kanten (6A, 6R) des Spalts hervorzurufen; und
- die Schale (11) ist aus einem Faser-/Harz-Verbundwerkstoff ausgeführt, bei dem mindestens der Großteil der Fasern derart angeordnet ist, dass sie einen Winkel mit der Spannweite des Blatts bilden, der im Wesentlichen gleich 0° ist.

5. Blatt nach Anspruch 4, **dadurch gekennzeichnet, dass** auf beiden Seiten des Spalts (6), in dessen Nähe (14), die Schale (11) starr mit dem ersten und dem zweiten Längsträger (7, 9) verbunden ist, und dadurch, dass außerhalb der Nähe (14) des Spalts (6), die Schale mit dem Rest des Blatts durch eine Verbindung aus einem elastischen Material mit einem Dämpfungsfaktor größer als 10 % verbunden ist, das geeignet ist, die Vibrationen des Blatts zu filtern, wie zum Beispiel Elastomer, und kontinuierlich oder diskontinuierlich zwischen der Schale und dem Rest des Blatts verteilt ist.

6. Blatt nach einem der Ansprüche 4 oder 5, **dadurch gekennzeichnet, dass** das Füllmaterial (12) ein harter bis halbharter Schaum ist.

7. Blatt nach einem der Ansprüche 4 bis 6, **dadurch gekennzeichnet, dass** es einen Streifen (13) aus einem elastischen Material mit einem Dämpfungsfaktor größer als 10 % umfasst, der geeignet ist, die Torsionseigenfrequenz des Blatts zu filtern, wie zum Beispiel Elastomer, wobei der Streifen den Spalt (6) ausfüllt.

8. Blatt nach einem der Ansprüche 4 bis 7, **dadurch gekennzeichnet, dass** das Stellglied zur dynamischen Verwindung (17) am freien Ende desselben angeordnet ist, um seine Anbringung und seine Wartung zu erleichtern.

9. Blatt nach einem der Ansprüche 1 bis 8, **dadurch gekennzeichnet, dass** die Mittel zur dynamischen Verwindung (17) derart dimensioniert sind, dass sie es ermöglichen, bei den verschiedenen Frequenzen der Rotationsfrequenz (Ω) des Rotors und im Gleichlauf mit dem Umlaufwinkel des Blatts, eine Amplitude des Winkels der elastischen, dynamischen Verwindung (v) mindestens gleich, als Absolutwert, der maximalen Amplitude der verschiedenen Verformungsmodi bei ebendiesen verschiedenen Frequenzen der Rotationsfrequenz (Ω) zu erhalten, um eine aktive multizyklische Kontrolle der Vibrationen realisieren zu können .

10. Blatt nach einem der Ansprüche 1 bis 9, **dadurch gekennzeichnet, dass** sein Teil (B) zur Befestigung an der Nabe (M) Mittel (25 bis 31) zur progressiven Steuerung seiner Torsionseigenfrequenz unter Fliehkraft um seine Spannweite (E) umfasst, die geeignet sind, während seiner Rotation um die Nabe, die Torsionseigenfrequenz im Wesentlichen auf die Rotationsfrequenz (Ω) des Rotors zu regeln.

11. Blatt nach Anspruch 10, **dadurch gekennzeichnet, dass** die Mittel (25 bis 31) zur progressiven Steuerung seiner Eigenfrequenz, die Eigenfrequenz anpassen, indem sie die scheinbare Torsionssteifigkeit unter Fliehkraft ungefähr um seine Spannweite (E) seines Befestigungsteils (B) anpassen.

12. Rotor (RO), dessen Flügel sich in Rotation um seine Nabe (M) mit der Rotationsfrequenz (Ω) im Bereich zwischen einer niedrigeren Rotationsfrequenz und einer höheren Rotationsfrequenz dreht, mindestens zwei Blätter (P) gemäß einem der Ansprüche 1 bis 11 umfasst, deren Umlaufwinkel bekannt sind, wobei der Rotor **dadurch gekennzeichnet ist, dass** er umfasst:
- Mittel zur Steuerung der Mittel zur dynamischen Verwindung (17) von jedem der Blätter, die, sogar in Abwesenheit einer Taumelscheibe, geeignet sind, in Echtzeit, das heißt, bei einer Frequenz mindestens gleich der Rotationsfrequenz (Ω), während der Rotation der Blätter und im Gleichlauf mit ihrem Umlaufwinkel, eine zyklische Verstellung für jedes der Blätter zu steuern;
- Mittel (25 bis 31) zur progressiven Steuerung der Torsionseigenfrequenz unter der Fliehkraft jedes der Blätter (P) um ihre Spannweite (E), die geeignet sind, während dieser Rotation jede der Torsionseigenfrequenzen im Wesentlichen auf die Rotationsfrequenz (Ω) des Rotors zu regeln, um die Torsionsresonanz um ihre Spannweite zu nutzen, um die Kraft zu minimieren, die für die Erzeugung einer zyklischen Verstellung durch dynamische Verwindung erforderlich ist.

13. Rotor nach Anspruch 12, **dadurch gekennzeichnet, dass** die Mittel zur Steuerung der Mittel zur dynamischen Verwindung (17) ebenfalls geeignet sind, in Abwesenheit einer Taumelscheibe, die kollektive Verstellung der Blätter während der Rotation des Rotors zu steuern.

14. Rotor nach einem der Ansprüche 12 oder 13, **dadurch gekennzeichnet, dass** die Mittel (25 bis 31) zur progressiven Steuerung der Torsionseigenfrequenz geeignet sind, in beide Richtungen die Torsionseigenfrequenz unter Fliehkraft um ihre Spannweite jedes der Blätter (P) zwischen einem minimalen Wert, der der niedrigeren Rotationsfrequenz des Rotors entspricht, und einem maximalen Wert, der der höheren Rotationsfrequenz des Rotors entspricht, anzupassen, wobei die Mittel (25 bis 31) zum Beispiel Mittel zur Versteifung des Befestigungsteils (B) jedes der Blätter gemäß einem der Ansprüche 2 bis 10 sein können, die es ermöglichen, die scheinbare Torsionssteifigkeit unter Fliehkraft jedes der Blätter um seine Spannweite zwischen einem minimalen Wert, der der Steifigkeit von jedem Blatt entspricht, das durch die Mittel (25 bis 31) nicht versteift wurde, und einem maximalen Wert, der der Steifigkeit des aerodynamischen Teils (A) von jedem Blatt entspricht, anzupassen.

15. Rotor nach einem der Ansprüche 12 bis 14, **dadurch gekennzeichnet, dass** er Mittel zur spontanen Aktion (37) umfasst, die geeignet sind, jedem der Blätter bei Ausfall der Steuermittel (25 bis 31) vorzuschreiben, dass die Torsionseigenfrequenz unter Fliehkraft jedes der Blätter gleich der Torsionseigenfrequenz unter Fliehkraft ihres aerodynamischen Teils (A) ist, um jede Divergenz der Torsionsresonanz der Blätter zu verhindern.

16. Verfahren zum dynamischen Verwinden mindestens eines Blatts (P) einer Flügels, der sich um die Nabe (M) eines Rotors (RO) mit einer Rotationsfrequenz (Ω) im Bereich zwischen einer niedrigeren Rotationsfrequenz und einer höheren Rotationsfrequenz dreht, wobei das Blatt (P), dessen Umlaufwinkel bekannt ist, eine Spannweite (E) aufweist, die einen Teil (B) zur Befestigung an der Nabe (M) und einen aerodynamischen Teil (A) umfasst, und verschiedene Verformungsmodi aufweist, insbesondere einen Modus der Torsionseigenfrequenz um seine Spannweite (E) in Abhängigkeit von seiner Torsionssteifigkeit um die Spannweite (E), **dadurch gekennzeichnet, dass** es die folgenden Aufgaben umfasst:
- Steuern in Echtzeit durch Mittel zum dynamischen Verwinden (17), das heißt bei einer Frequenz mindestens gleich der Rotationsfrequenz (Ω) des Rotors, während der Rotation jedes der Blätter (P) und im Gleichlauf mit dem Umlaufwinkel jedes der Blätter, des Winkels der elastischen dynamischen Verwindung (v) der Sehne in der Querschnittsebene des freien Endes von jedem Blatt mit mindestens 14° nach vorne oder nach hinten, so dass diese Mittel zum dynamischen Verwinden (17) sogar in Abwesenheit einer Taumelscheibe eine zyklische Verstellung erzeugen können;
- Steuern, mithilfe der Mittel (25 bis 31) der scheinbaren Torsionseigenfrequenz unter Fliehkraft ungefähr um die Spannweite (E) jedes der Blätter (P), damit sie im Wesentlichen gleich der Rotationsfrequenz (Ω) des Rotors (RO) ist und damit folglich das elastische dynamische Verdrehen (v) mit einer minimalen Kraft durch Torsionsresonanz erhalten wird; und
- Filtern der Eigenfrequenzen der verschiedenen Verformungsmodi von jedem Blatt (P), um die Divergenz ihrer Resonanz zu verhindern.

17. Verfahren zum Verwinden nach Anspruch 16, **dadurch gekennzeichnet, dass** die Steuerung der Mittel zum dynamischen Verwinden (17) multizyklisch ist, das heißt bei einer mehrfachen Frequenz der Rotationsfrequenz (Ω) des Rotors (RO), um, zusätzlich zur Steuerung ihrer zyklischen Verstellung, die verschiedenen Verformungsmodi der Blätter aktiv zu kontrollieren.

18. Verfahren zur Verwindung nach einem der Ansprüche 16 oder 17, **dadurch gekennzeichnet, dass** die Steuerung der Mittel zum dynamischen Verwinden (17), zusätzlich zur Steuerung ihrer zyklischen Verstellung, die kollektive Verstellung der Blätter (P) steuert.

19. Verfahren zum Verwinden nach einem der Ansprüche 16 bis 18, **dadurch gekennzeichnet, dass** die Steuerung der Torsionseigenfrequenz unter Fliehkraft ungefähr um ihre Spannweite (E) von jedem Blatt (P) durch die progressive Steuerung der scheinbaren Torsionssteifigkeit unter Fliehkraft ungefähr um seine Spannweite (E) des Befestigungsteils (B) von jedem Blatt (P) erhalten wird, wobei der Befestigungsteil (B), der flexibler ist als der entsprechende aerodynamische Teil (A), bis auf einen Maximalwert gleich der scheinbaren Torsionssteifigkeit um seine Spannweite (E) des aerodynamischen Teils versteift sein können.

20. Verfahren zum Verwinden nach einem der Ansprüche 16 bis 19, **dadurch gekennzeichnet, dass** es eine Aufgabe umfasst, die bei einem Ausfall der Steuerungsmittel (25 bis 31) vorschreibt, dass die Torsionseigenfrequenz unter Fliehkraft von jedem Blatt um seine Spannweite gleich der Torsionseigenfrequenz unter Fliehkraft seines aerodynamischen Teils (A) um seine Spannweite ist, um jede Divergenz der Torsionsresonanz der Blätter zu verhindern.

## Claims

1. Blade (P) of a wing rotating about the hub (M) of a rotor (RO) having a rotation frequency (Ω), said blade (P), of which the rotation azimuth is known, having a span (E), comprising a portion (B) for fastening to said hub (M) and an aerodynamic portion (A), and having different distortion modes, in particular a mode for torsion about its span (E) of natural frequency as a function of its torsion stiffness about said span (E),
said blade comprising dynamic twist means (17), approximately about its span (E), able to be actuated in real time, that is during its rotation about said hub, at least at the rotation frequency (Ω) of said rotor and in synchronisation with the rotation azimuth of said blade, such that said dynamic twist means (17) are able to generate a cyclic pitch even in the absence of a cyclic plate;
**characterised in that**
- its torsion stiffness, apparent under a centrifugal force, approximately about its span (E), is sufficiently low to allow said dynamic twist means (17) to obtain, in the right section plane of the free end of said blade, a resilient dynamic twist angle (v) for the chord of at least 14° when diving or stalling, while remaining sufficiently high for the natural torsion frequency of the blade about its span to be equal to the rotation frequency (Ω) of said rotor, so to allow for a dynamic twist of the blade through torsion resonance and thus to minimise the energy required for generating the cyclic pitch;
- its damping factor, under a centrifugal force, is strictly positive, so as to avoid resonance divergence for the different modes.

2. Blade according to claim 1, **characterised in that** said fastening portion (B) has an apparent torsion stiffness of 10 to 100 times lower than that of the aerodynamic portion (A).

3. Blade according to either claim 1 or claim 2, **characterised in that**:
- its structure is made of composite material;
- its coating is unidirectional and has a direction at an angle substantially equal to 0° relative to the span of said blade, so as to obtain a minimum torsion stiffness of the blade about the span thereof.

4. Blade according to any of claims 1 to 3, **characterised in that** the aerodynamic portion (A) is provided with a longitudinal slit (6) in one of its pressure (3) or suction (2) surfaces and comprises:
- a first spar (7) forming a leading edge (4) and the adjacent pressure and suction portions thereof, and having a longitudinal transverse face forming the front edge (6A) of said slit (6);
- a second spar (9) being separated from said first spar (7) by said slit (6) and having a longitudinal transverse face forming the rear edge (6R) of said slit (6);
- a shell (11) forming the pressure (3) and suction (2) surfaces of said blade, split longitudinally by said slit (6) and enclosing said first and second spars (7, 9) while being integral therewith;
- a filling material (12) for said shell (11);
- the dynamic twist means (17) comprising a dynamic twist actuator able to cause a relative slide between the edges (6A, 6R) of said slit; and
- said shell (11) being made of a fibre-resin composite material, of which at least the majority of the fibres are arranged so as to form an angle substantially equal to 0° relative to the span of said blade.

5. Blade according to claim 4, **characterised in that** on either side of said slit (6), in the vicinity (14) thereof, said shell (11) is rigidly connected to said first and second spars (7, 9), and **in that** beyond the vicinity (14) of said slit (6), said shell is connected to the remainder of said blade via a link made of a resilient material, such as an elastomer, having a damping factor higher than 10 %, able to filter vibrations of the blade, and being distributed, either continuously or discontinuously, between said shell and said remainder of the blade.

6. Blade according to either claim 4 or claim 5, **characterised in that** said filling material (12) is a stiff to semi-stiff foam.

7. Blade according to any of claims 4 to 6, **characterised in that** it comprises a strip (13) made of a resilient material, such as an elastomer, having a damping factor higher than 10 %, able to filter the torsion frequency of the blade, said strip filling the slit (6).

8. Blade according to any of claims 4 to 7, **characterised in that** the dynamic twist actuator (17) is arranged at the free end of the blade, so as to facilitate installation and maintenance of said actuator.

9. Blade according to any of claims 1 to 8, **characterised in that** the dynamic twist means (17) are dimensioned to allow, at multiple frequencies of the rotation frequency (Ω) of said rotor and in synchronisation with the rotation azimuth of said blade, an amplitude of said resilient dynamic twist angle (v) to be obtained which is at least equal, in absolute terms, to the maximum amplitude of the different distortion modes at these same multiple frequencies of the rotation frequency (Ω), so as to allow a multicyclic active control of the vibrations to be carried out.

10. Blade according to any of claims 1 to 9, **characterised in that** its portion (B) for fastening to the hub (M) comprises means (25 to 31) for progressively controlling its natural torsion frequency, under a centrifugal force, about the span (E), which means are able to slave, during its rotation about said hub, said natural torsion frequency substantially to the rotation frequency (Ω) of the rotor.

11. Blade according to claim 10, **characterised in that** said means (25 to 31) for progressively controlling its natural torsion frequency adjust said natural torsion frequency while adjusting the torsion stiffness, apparent under a centrifugal force, approximately about its span (E), of its fastening portion (B).

12. Rotor (RO) having a rotary wing in rotation about its hub (M) at the rotation frequency (Ω), ranging between a lower rotation frequency and a higher rotation frequency, comprising at least two blades (P) according to any of claims 1 to 11, the rotation azimuths of which are known, said rotor being **characterised in that** it comprises:
- means for controlling the dynamic twist means (17) of each of said blades and able, even in the absence of a cyclic plate, to control in real time, that is at a frequency at least equal to the rotation frequency (Ω), during rotation of said blades and in synchronisation with their rotation azimuth, a cyclic pitch for each of said blades;
- means (25 to 31) for progressively controlling the natural torsion frequency, under the centrifugal force, of each of said blades (P) about their span (E), which means are able to slave, during this rotation, each of said natural torsion frequencies substantially to the rotation frequency (Ω) of the rotor, so as to take advantage of the torsion resonance about their span so as to minimise the power required for generating a cyclic pitch through a dynamic twist.

13. Rotor according to claim 12, **characterised in that** said means for controlling the dynamic twist means (17) are also able, in the absence of a cyclic plate, to control the collective pitch of said blades during rotation of said rotor.

14. Rotor according to either claim 12 or claim 13, **characterised in that** said means (25 to 31) for progressively controlling the natural torsion frequency are able to adjust, in both directions, the natural torsion frequency, under a centrifugal force, about the span of each of said blades (P), between a minimum value corresponding to the lower rotation frequency of the rotor and a maximum value corresponding to the higher rotation frequency of said rotor, said means (25 to 31) possibly being, for example, means for stiffening the fastening portion (B) of each of said blades according to any of claims 2 to 10, allowing for an adjustment of the torsion stiffness, apparent under a centrifugal force, of each of said blades about their span, between a minimum value corresponding to said stiffness of each of said blades not stiffened by said means (25 to 31), and a maximum value corresponding to said stiffness of the aerodynamic portion (A) of each of said blades.

15. Rotor according to any of claims 12 to 14, **characterised in that** it comprises spontaneous action means (37) able to ensure for each of said blades, in the case of a failure of said control means (25 to 31), that said natural torsion frequency under a centrifugal force of each of said blades is equal to the natural torsion frequency under a centrifugal force of their aerodynamic portion (A), so as to avoid any torsion resonance divergence for said blades.

16. Dynamic twist method for at least one blade (P) of a wing rotating about the hub (M) of a rotor (RO) having a rotation frequency (Ω) ranging from a lower rotation frequency to a higher rotation frequency, said blade (P), the rotation azimuth of which is known, having a span (E), comprising a portion (B) for fastening to said hub (M) and an aerodynamic portion (A), and having different distortion modes, in particular a mode for torsion about its span (E) with a natural torsion frequency, as a function of its torsion stiffness about said span (E), **characterised in that** it comprises the following steps:
- controlling in real time by dynamic twist means (17), that is at a frequency at least equal to the rotation frequency (Ω) of said rotor, during rotation of each of said blades (P) and in synchronisation with the rotation azimuth of each of said blades, the resilient dynamic twist angle (v) of the chord in the right section plane of the free end of each of said blades, of at least 14° when diving or stalling, so that said dynamic twist means (17) are able to generate a cyclic pitch even in the absence of a cyclic plate;
- controlling, using the means (25 to 31), the natural torsion frequency, apparent under a centrifugal force, approximately about the span (E) of each of said blades (P), so that it is substantially equal to the rotation frequency (Ω) of said rotor (RO) and so that, consequently, said resilient dynamic twist (v) is achieved with minimum power through torsion resonance; and
- filtering the natural frequencies of the different distortion modes of each of said blades (P), so as to avoid any resonance divergence.

17. Twist method according to claim 16, **characterised in that** the control of the dynamic twist means (17) is multicyclic, that is at a multiple frequency of the rotation frequency (Ω) of said rotor (RO), so as to actively control the different distortion modes of said blades in addition to controlling their cyclic pitch.

18. Twist method according to either claim 16 or claim 17, **characterised in that** control of the dynamic twist means (17) controls the collective pitch of said blades (P) in addition to controlling their cyclic pitch.

19. Twist method according to any of claims 16 to 18, **characterised in that** control of the natural torsion frequency, apparent under a centrifugal force, approximately about the span (E), of each of said blades (P), is obtained through progressively controlling the torsion stiffness, apparent under a centrifugal force, approximately about the span (E), of the fastening portion (B) of each of said blades (P), said fastening portion (B), which is more flexible than the corresponding aerodynamic portion (A), being able to be stiffened up to a maximum value equal to the apparent torsion stiffness, about the span (E), of said aerodynamic portion.

20. Twist method according to any of claims 16 to 19, **characterised in that** it comprises a step of ensuring, in the case of a failure of said control means (25 to 31), that the natural torsion frequency under a centrifugal force of each of said blades about its span, is equal to the natural torsion frequency, under a centrifugal force, of their aerodynamic portion (A) around their span, so as to avoid any torsion resonance divergence for said blades.
